# EUROPEAN PATENT APPLICATION

(11) **EP 2 012 086 A1**
(43) Date of publication of application: **07.01.2009**
(21) Application number: 08251983.6
(22) Date of filing: 06.06.2008
(51) Int. Cl.: G01B 7/14

(54) **Displacement measurement arrangement**

(30) Priority: 06.07.2007 GB 0713108
(71) Applicant: Rolls-Royce plc, 65 Buckingham Gate London SW1E 6AT (GB)
(72) Inventor: Bird, Colin, Derby DE24 8QD (GB)
(74) Representative: Gunn, Michael Alan

(57) **Abstract**

A displacement measurement arrangement (38) for measuring the movement of a body (14), the arrangement (38) comprising a target (40) located on the body (14) and a probe (36) having an observation axis (37), characterised in that the target (40) comprises at least one projection (42) of varying width (41) relative to the intersection path (A, B) of the observation axis (37) and measurement of the movement of the body (14) is made in more than one direction simultaneously.

## Description

The present invention relates to a displacement measurement arrangement, suitable for measuring clearances in gas turbine engines.

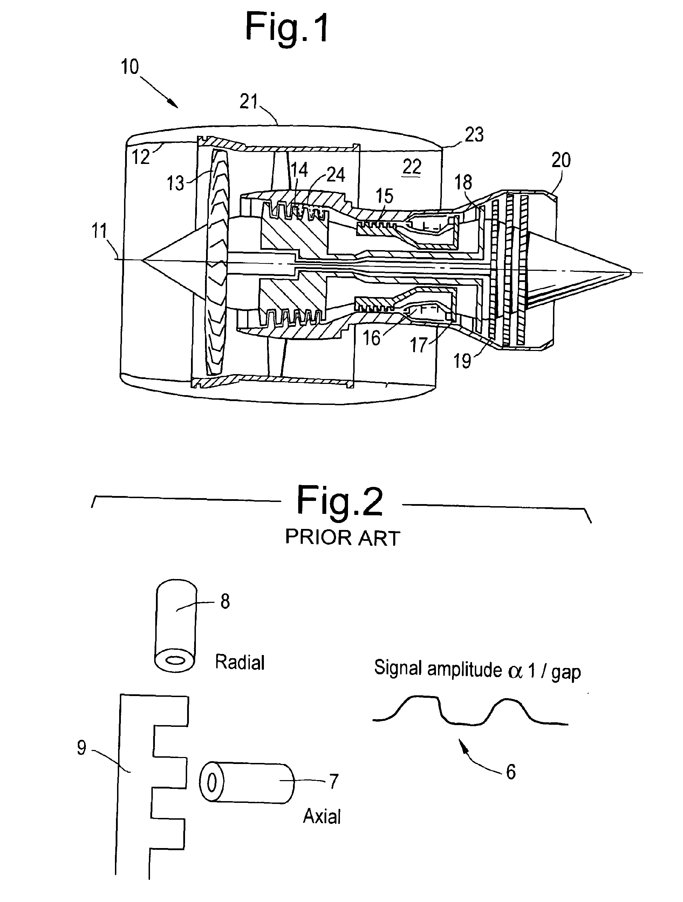

Currently a widely used method of displacement or clearance measurement uses a measurement of capacitance between a probe and a target where capacitance is inversely proportional to the separation (Capacitance = Area /separation). Figure 2 shows a typical arrangement of probes 7, 8 used for discontinuous or slotted targets 9 and a signal output 6 has amplitude that is calibrated with separation. Such probes and measurement systems may be obtained from Thermocoax and Fogale Nanotech both of France.

This current type of probe and target is applied to discs, shafts, seals etc of gas turbine engines and requires the installation of two probes 7, 8 to separately measure axial and radial movements of the target 9. Difficulty is experienced in installing both probes 7, 9 and their leads in confined and hot areas of a gas turbine engine for example.

Therefore it is an object of the present invention to provide a displacement measurement arrangement that reduces the number of probes and is therefore cheaper, requires less design time and requires fewer wires enabling easier and quicker installation.

In accordance with the present invention a gas turbine engine is provided a displacement measurement arrangement for measuring the movement of a body, the arrangement comprising a target located on the body and a probe having an observation axis, characterised in that the target comprises at least one projection of varying width relative to the intersection path of the observation axis and measurement of the movement of the body is made in more than one direction simultaneously.

Normally, the body is rotating.

Alternatively, the target is formed by a configuration of the body.

Preferably, the target comprises a general two dimensional shape from any one of the group comprising a triangle or trapezoid.

Alternatively, the target comprises an arcuate side. Preferably, the target comprises an annular array of projections.

Another aspect of the present invention is provided by a method of measuring the displacement of a body comprising a displacement measurement arrangement as set out in the preceding paragraphs, the method comprises the steps of a) rotating the body at a first speed and rotating the body at a second speed wherein the body displaces in at least one of a radial or axial direction, b) recording the output of the probe as the target passes along the two paths as an amplitude and timing variation, c) calibrating radial movement of the target with the amplitude variation and axial movement of the target with a timing variation; thereby measuring the movement of the body in more than one direction simultaneously.

The present invention will be more fully described by way of example with reference to the accompanying drawings in which:
Figure 1 is a schematic section of part of a ducted fan gas turbine engine;
Figure 2 is a prior art displacement measurement arrangement including two probes and a target;
Figure 3 is a displacement measurement arrangement comprising a single probe and novel target in accordance with the present invention;
Figure 4 is a second embodiment of the displacement measurement arrangement in accordance with the present invention.
Figures 5A-D show further embodiments of the target in accordance with the present invention.

With reference to Figure 1, a ducted fan gas turbine engine generally indicated at 10 has a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, and intermediate pressure turbine 18, a low-pressure turbine 19 and a core engine exhaust nozzle 20. A nacelle 21 generally surrounds the engine 10 and defines the intake 12, a bypass duct 22 and a bypass exhaust nozzle 23.

The gas turbine engine 10 works in the conventional manner so that air entering the intake 11 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high, intermediate and low-pressure turbines 17, 18, 19 respectively drive the high and intermediate pressure compressors 15, 14 and the fan 13 by suitable interconnecting shafts.

Each compressor and turbine has at least one rotor stage that comprises a rotor disc having an annular array of radially extending blades attached in convention fashion thereto. The blades rotate within a casing 24 and it is preferable to have a minimal gap or clearance between the tips of the blades and the casing to prevent over-tip leakage and therefore efficiency loss. During engine operation thermal and mechanical forces affect the tip clearances. To ensure the minimal clearances, it is desirable to know the range of movement a rotor disc and its blades undergo. It is common for casings and rotors to be cooled and scheduling of this cooling can control the thermal movements and therefore the tip clearances.

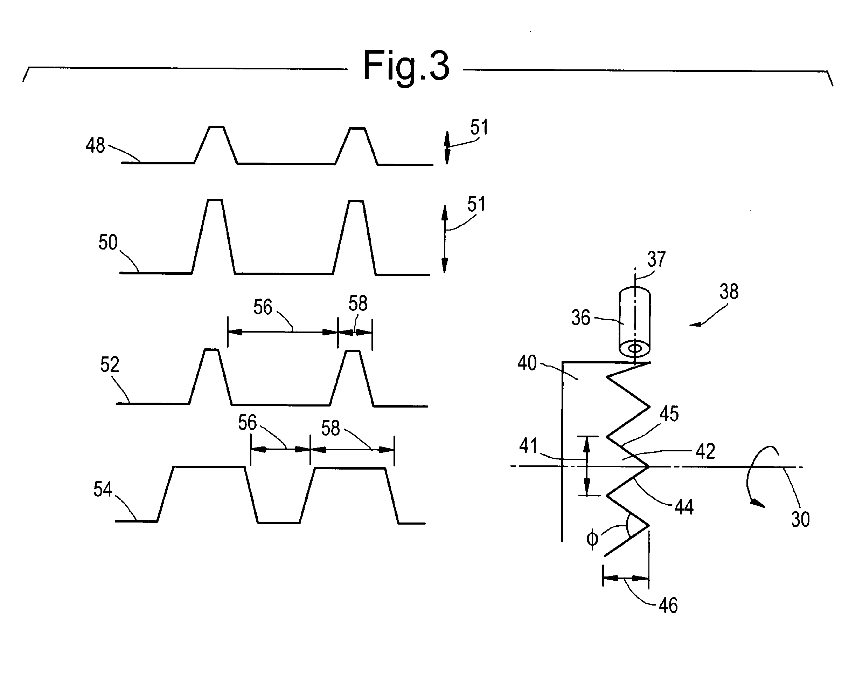

Referring now to Figure 3, the present invention is a displacement measuring arrangement 38 embodied by a circular or cylindrical target 40, rotating about axis 30 and having projections 42 which vary in width 41 in the axial direction. The projections 42 provide a discontinuous target, 40 to a probe 36 that varies geometrically in the axial direction.

The probe 36 has an observation axis 37 and is orientated in a radial direction, the target 40 being attached to or formed as an integral part of the disc or component to be measured such that it rotates with the disc about the same axis 30. In use the disc rotates and the target 40 travels passed the probe 36.

Preferably, the projections 42 are V-shaped teeth and the resulting signal will contain both radial and axial displacement information. This distance measuring arrangement 38 is installed more easily and cheaper than the prior art arrangement due to the requirement to only fit one probe 36 and its leads.

A variety of tooth shapes could be used to the same effect, but each must comprise a variable width and as such has at least one angled side 44. It is important also that the axial extent 46 of the target 40 is larger than the range of movement of the body it is located on (a disc in this example). One preferred example is a compressor disc having a target 40 defining zigzag like projections 42 having an apex angle ø 90°, where both sides 44, 45 are equally angled.

Radial movement of the disc and therefore target 40 leads to an output having amplitude 51 variation as seen between lines 48 and 50. Axial movement of the disc leads to the probe 36 generating a timing variation as seen between lines 52 and 54, i.e. the gap 56 to tooth 58 ratio changes. These signal variations with radial and axial displacements are calibrated, therefore allowing radial and axial displacements to be identified.

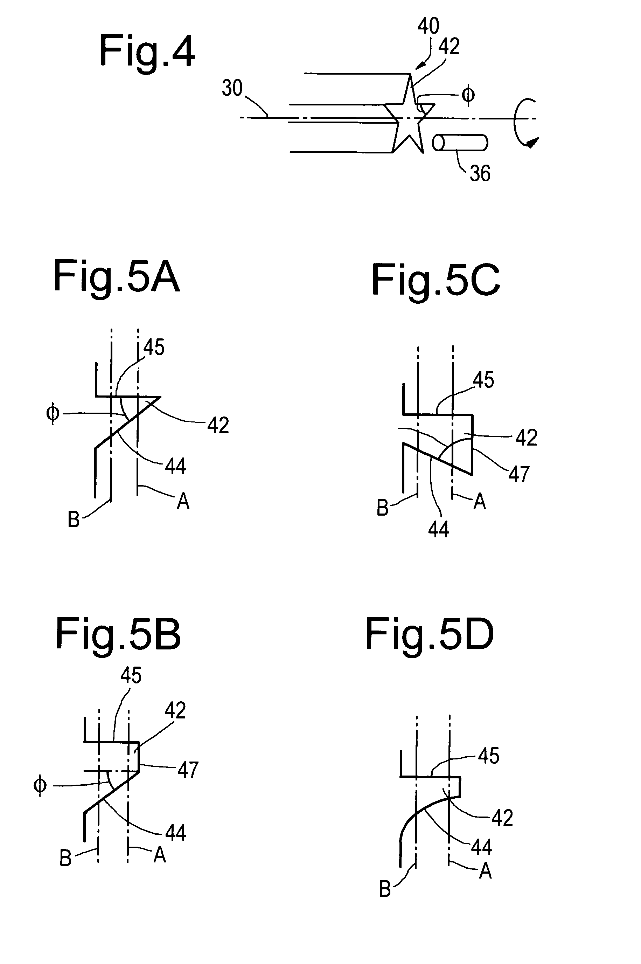

In Figure 3, where the target 40 has projections 42 which vary in width 41 in the axial direction, the probe 36 is oriented with its longitudinal axis 37 in the radial direction. An alternative orientation is where the target has projections which vary in width in the radial direction, in which case the probe axis would be situated in the axial direction as shown in Figure 4. In this configuration, axial movement would produce a variation in signal amplitude as seen in lines 48 and 50 and radial movement would produce a timing variation in the gap to tooth ratio as seen in lines 52 and 54. Again simple calibration would yield relative displacements.

The present invention is advantageous because it reduces the number of probes and is therefore cheaper requires less design time and requires fewer wires enabling easier and quicker installation. Furthermore, the present invention allows two dimensional measurements where there is only space for one probe 36.

The present invention is adaptable to particular applications where the target is located on a body which is subject to greater movement in one direction that another. Here the projection profiles are adjusted by varying the included angle o to adjust relative sensitivity to axial or radial movements. Furthermore, accuracy may be increased in the more critical direction where the axial extent of the projections was increased for example.

It should be appreciated that the probe 36 may be any one of the types including capacitance, eddy current, inductive, microwave and optical.

The present invention is applicable to non-contact displacement or position measurement in any rotating or reciprocating machinery, for example other engines in general, electrical motors / generators, optical storage devices such as compact discs or digital video discs, shafts and machine tools.

In Figures 5A-D various configurations of projections 42 of the novel target 40 are shown. Dashed lines A and B indicate the paths along which the observation axis intersects the projections between different axial positions arising from variation in engine operating conditions. It should be appreciated that target features already present in engine components which exhibit these types of profiles may be used.

In Figure 5A, the projection 42 comprises an angled side 44 that meets at an apex a side 45 normal to the direction of rotation of the target 40, therefore the width increases from paths A to B. In Figure 5B, the projection 42 comprises an angled side 44 and a side 45 normal to the direction of rotation of the target 40 and which are spaced apart by a width 47.

In Figure 5C, the projection 42 comprises a reversely angled side 44 that meets at a width 47 with a side 45 normal to the direction of rotation of the target 40, therefore the width decreases from paths A to B.

In Figure 5D, the projection 42 comprises at least one arcuate side 44. Here the curve increases the width of the projection corresponding to a non-linear rotor response.

In Figures 5A-D is should be appreciated that side 45 may be angled or arcuate.

It should be appreciated that the displacement measurement arrangement 38 for measuring the movement of a body 14 will also provide an indication of the rotational speed of the body. In certain applications axial and/or radial speed may also be easily calculated.

## Claims

1. A displacement measurement arrangement (38) for measuring the movement of a body (14), the arrangement (38) comprising a target (40) located on the body (14) and a probe (36) having an observation axis (37), **characterised in that** the target (40) comprises at least one projection (42) of varying width (41) relative to the intersection path (A, B) of the observation axis (37) and measurement of the movement of the body (14) is made in more than one direction simultaneously.

2. A displacement measurement arrangement (38) as claimed in claim 1 wherein the body (14) is rotating.

3. A displacement measurement arrangement (38) as claimed in any one of claims 1-2 wherein the target (40) is formed by a configuration of the body (14).

4. A displacement measurement arrangement (38) as claimed in any one of claims 1-3 wherein the target (40) comprises a general two dimensional shape from any one of the group comprising a triangle or trapezoid.

5. A displacement measurement arrangement (38) as claimed in any one of claims 1-4 wherein the target (40) comprises an arcuate side.

6. A displacement measurement arrangement (38) as claimed in any one of claims 1-5 wherein the target (40) comprises an annular array of projections (42).

7. A method of measuring the displacement of a body (14) comprising a displacement measurement arrangement (38) as claimed in claim 1, the method comprises the steps of
a) rotating the body at a first speed and rotating the body at a second speed wherein the body displaces in at least one of a radial or axial direction,
b) recording the output of the probe as the target passes along the two paths (A, B) as an amplitude and timing variation,
c) calibrating radial movement of the target (40) with the amplitude (48, 50) variation and axial movement of the target with a timing variation (52, 54),
thereby measuring the movement of the body (14) in more than one direction simultaneously.
